# FASCICULE DE BREVET EUROPEEN

(11) **EP 0 358 559 B1**
(45) Date de publication et mention de la délivrance du brevet: **20.04.1994**
(21) Numéro de dépôt: 89402407.4
(22) Date de dépôt: 05.09.1989
(51) Int. Cl.: G09B 9/08

(54) **Système de restitution de l'environnement visuel d'un pilote en simulateur**
System zur Wiedergabe der visuellen Umgebung eines Piloten im Simulator
Reproduction system for the visual environment of a pilot in a simulator

(30) Priorité: 09.09.1988 FR 8811821
(43) Date de publication de la demande: 14.03.1990
(73) Titulaire: THOMSON-CSF, 75008 Paris (FR); ETAT FRANCAIS, F-75996 Paris Armée (FR)
(72) Inventeur: Henique, Michel, F-92045 Paris La Defense (FR); Malterre, Jean-Marie, F-92045 Paris La Defense (FR)
(74) Mandataire: Chaverneff, Vladimir

(56) Documents cités:
- FR-A- 2 438 308
- GB-A- 2 091 193

## Description

La présente invention se rapporte à un système de restitution de l'environnement visuel d'un pilote en simulateur.

L'environnement visuel d'un pilote comprend les principales images suivantes :
- Images animées de la scène extérieure, normalement observées en vol par le pilote à travers la verrière de son cockpit, comprenant le ciel, le sol, et des objets mobiles tels que des avions, des cibles aériennes et terrestres, des missiles, des effets dus à des tirs, etc...
- Images animées du viseur fixe et du viseur mobile (viseur de casque).
- Images animées des différents instruments situés principalement sur la planche de bord à l'intérieur de la cabine.

Les simulateurs connus permettant de restituer un tel environnement visuel sont de deux types : les "simulateurs en sphère" et l'"entraîneur".

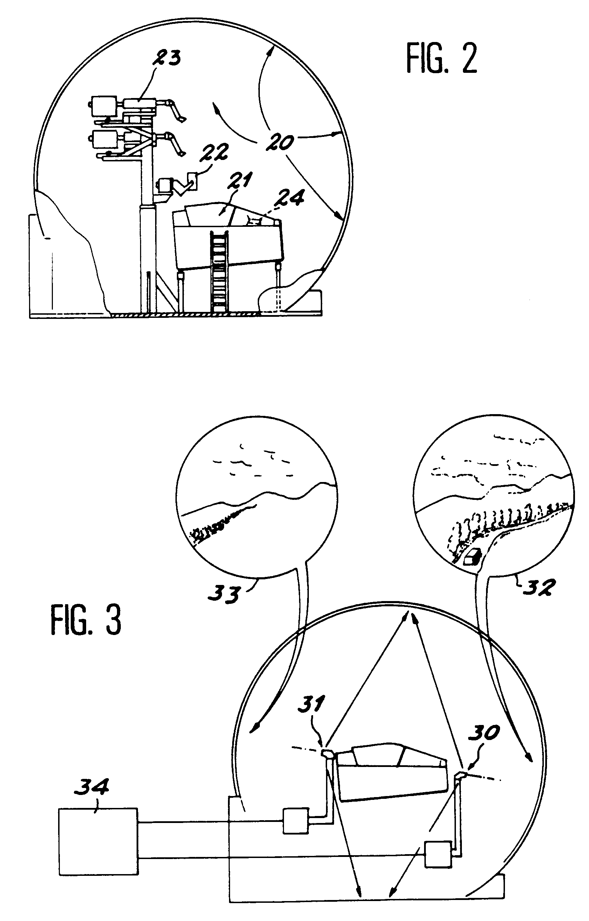

Le "simulateur en sphère" comprend une sphère de diamètre 8 à 12 mètres (figure 2) dont la surface intérieure constitue un écran réflecteur 20 concave et à grand angle. Une reproduction du cockpit 21 d'avion ou d'hélicoptère, dans lequel est placé le pilote, est située au centre de la sphère.

La vue du sol ainsi que celle du ciel sont simulées, par exemple, par deux images projetées sur la sphère et produites par un dispositif 22 de projection, placé au-dessus du cockpit et qui comprend deux objectifs du type "fish-eye" orientés en opposition et situés de part et d'autre du centre de la sphère.

Les effets de roulis et tangage sont obtenus par la rotation des deux fish-eyes autour du centre de la sphère.

Les images des objets mobiles sont obtenues au moyen de systèmes de projection 23 placés au-dessus et en arrière du cockpit.

L'image du viseur fixe est présentée par un dispositif optique 24 installé dans le cockpit.

Une variante (figure 3) de ce simulateur en sphère met en oeuvre deux objectifs fish-eyes fixes 30 et 31 disposés de part et d'autre du cockpit hors de la vue du pilote. Ces deux fish-eyes projettent sur l'écran deux images juxtaposées 32 et 33 issues de deux projecteurs TV à light-valve connectés à un calculateur d'images synthétiques 34 générant le ciel et le sol, situés devant et derrière le cockpit, en tenant compte des effets dus aux changements d'attitude et de position de l'aéronef simulé.

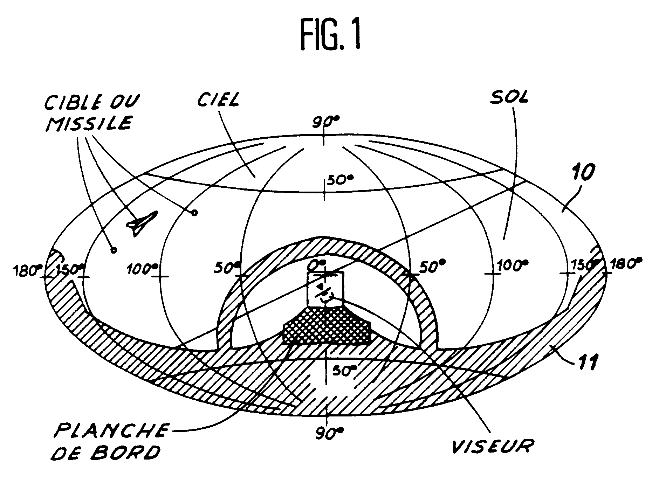

Le simulateur en sphère et sa variante décrite précédemment présentent l'ensemble des images de la scène extérieure, du viseur fixe, de la planche de bord, etc... en respectant, comme dans la réalité, la grandeur apparente et la position relative de chacun des éléments de ces images par rapport à la cabine et aux références habituelles du pilote et en respectant le champ de vision illustré par la figure 1.

Un tel type de simulateur fonctionne très bien, mais est très onéreux.

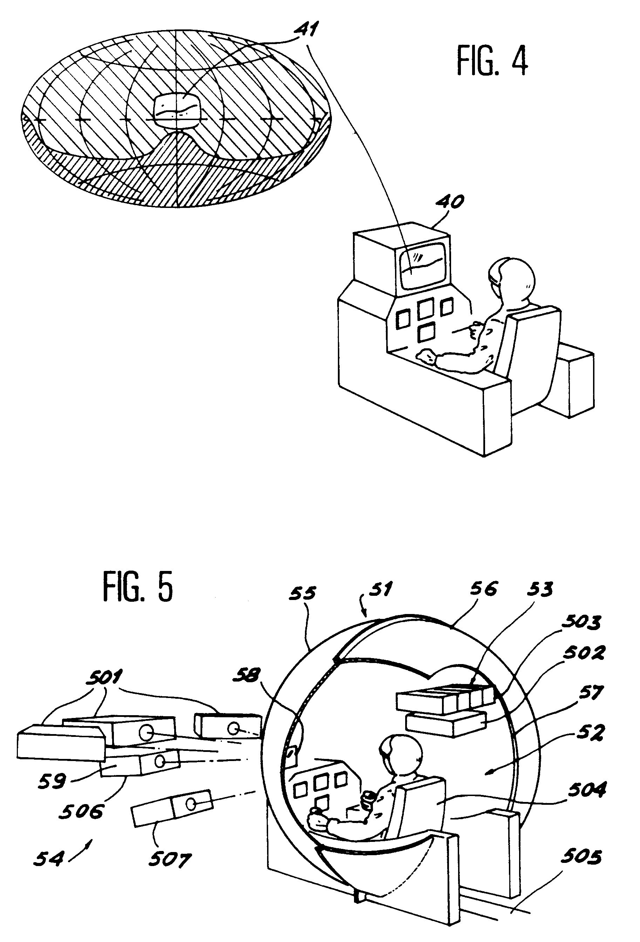

Le second dispositif du type "entraîneur" (figure 4) utilise, pour restituer l'environnement du pilote, des sous-ensembles tels que moniteur de télévision 40 ou projecteur du commerce présentant en particulier les images de la scène extérieure 41 sur un écran plan sans respecter, contrairement au simulateur en sphère, la grandeur apparente et la position relative de chacun des éléments de la scène extérieure par rapport au cockpit et aux références du pilote.

Ainsi, l'image de la scène extérieure frontale, qui dans la réalité couvre un angle solide de 2¶ stéradians, est présentée au moyen de l'écran plan sous un angle solide 41 inférieur à 0,5 stéradian privant le pilote, notamment dans son champ de vision périphérique, des références nécessaires à la conduite d'une mission.

Ce second type de simulateur est peu onéreux, mais n'est pas satisfaisant du point de vue du réalisme de la restitution de l'environnement visuel.

On connaît d'après le document FR-A-2 438 308 un dispositif de visualisation dans lequel les images issues de plusieurs projecteurs passent par un ou deux objectifs très grand angle "fish-eye", ce qui ne permet pas d'obtenir pour les informations issues de certains des projecteurs de meilleures luminosité et définition que pour celles issues des autres projecteurs.

On connaît d'après le document GB-A-2 091 193 un dispositif de visualisation dont tous les projecteurs sont à l'extérieur de la sphère de projection, ce qui nécessite l'emploi de plusieurs projecteurs pour obtenir une image panoramique à très grand champ.

La présente invention a pour objet un système de restitution de l'environnement visuel d'un pilote en simulateur, système qui soit peu onéreux facilement reconfigurable et restitue un environnement visuel le plus réaliste possible, en respectant les contraintes suivantes :
- respect de la grandeur apparente et de la position relative de chacun des éléments de ces images par rapport au cockpit et aux références habituelles du pilote telles que l'axe référence horizontale fuselage (RHF) et l'axe référence de l'image viseur, etc...,
- respect des dimensions du champ de vision que le pilote petit explorer en tournant la tête comme dans la réalité. Les limites de ce champ de vision sont illustrées par la figure 1 qui est un exemple définissant la frontière entre la zone 10 observée à travers le cockpit et la zone 11, occultée par le cockpit comprenant la planche de bord.

Le système de restitution d'environnement visuel conforme a l'invention comporte une paroi au moins approximativement sphérique ayant des dimensions du même ordre de grandeur que celles d'un cockpit réel d'aéronef, réalisée en matériau au moins partiellement translucide au moins une partie d'au moins sa face interne étant traitée de façon à former un écran de projection d'images, cette paroi étant associée à au moins un projecteur d'images intérieur et à au moins au projecteur d'images extérieur, le projecteur d'images intérieur étant chargé de la projection d'images à grand champ optique, et le projecteur extérieur étant chargé de la projection d'images à haute définition. De préférence, la surface sphérique a un diamètre compris entre 1 et 3 mètres environ. Son épaisseur est d'environ 2 à 10 mm.

La présente invention sera mieux comprise à la lecture de la description détaillée de plusieurs modes de réalisation, pris comme exemples non limitatifs et illustrés par le dessin annexé, sur lequel :
- la figure 1, déjà mentionnée, est une représentation schématique du champ de vision d'un pilote,
- les figures 2 à 4, également déjà mentionnées, sont des vues schématiques de simulateurs de l'art antérieur,
- la figure 5, est une vue schématique d'un système conforme à l'invention,
- les figures 6 à 8, sont des vues schématiques de trois modes de réalisation de la planche de bord du système de la figure 5, et
- les figures 9 à 12 sont des blocs diagrammes de différents modes de réalisation du dispositif de projection intérieur du système de la figure 5.

On a décrit ci-dessous une sphère de projection d'images, mais il est bien entendu que l'on peut avoir une demi-sphère ou même une paroi sensiblement sphérique, par exemple, une paroi formée d'un grand nombre de petites facettes planes juxtaposées.

Le système de l'invention comporte essentiellement une sphère-écran 51 de petit diamètre : 1 à 3 mètres environ. Cette sphère 51 est associée à un cockpit simulé 52 d'aéronef (hélicoptère ou avion) et à des dispositifs de projection intérieurs 53 et extérieurs 54. Ce système permet de visualiser la scène frontale sur un champ supérieur ou égal à 2¶ stéradians, tel que celui représenté en figure 1.

Selon un mode de réalisation avantageux, la sphère-écran 51 est réalisée à partir de deux demi-sphères transparentes 55, 56 antérieure et postérieure fabriquées séparément par soufflage à chaud à partir de deux plaques planes en matière plastique du type "Altuglas" et assemblées ensuite par collage à froid pour former une sphère complète dans laquelle est pratiquée une ouverture 57 permettant l'installation du pilote.

La sphère 51, ou tout au mois la demi-sphère antérieure 55, est traitée sur ses faces intérieure et extérieure de manière à permettre d'y projeter les images de l'environnement visuel à partir des dispositifs de projection 53 et 54. L'écran ainsi obtenu fonctionne simultanément en projection directe pour les projecteurs 53 et en rétroprojection pour les projecteurs 54.

L'ensemble des images issues des projecteurs 53 et 54 sont visualisées sur une des faces de la sphère51, avantageusement sur la face interne. Ainsi, en certaines zones de cette face interne, par exemple dans la zone "viseur" 58, il est possible de superposer quatre images différentes : les images du viseur produites par un projecteur extérieur 59, les images du paysage issues de projecteurs extérieurs 501 (qui sont par exemple au nombre de trois comme représenté en figure 5), les images du ciel issues d'un projecteur intérieur 502, et les images de cibles issues d'un projecteur intérieur 503.

On peut modifier les caractéristiques optiques d'au moins une partie de la sphère-écran soit en faisant varier les caractéristiques des couches de revêtement déposées sur au moins l'une des deux faces intérieure et extérieure de la sphère, soit en dépolissant l'une de ces deux faces. Les couches de revêtement peuvent être des couches de peinture, et on peut faire varier leur épaisseur et/ou leur couleur. Dans le cas le plus simple, on utilise de la peinture blanche. On peut également utiliser des couches de peinture et le dépoli. Dans ce cas, les couches de peinture peuvent être déposées sur une face, et le dépoli réalisé sur l'autre face, ou bien des couches de peintures peuvent être déposées sur le dépoli.

Ce traitement par couches de peinture et/ou dépoli des surfaces de la sphère permet d'adapter le système à la puissance lumineuses des projecteurs utilisés. Un revêtement de peinture de forte épaisseur déposé sur la surface interne de la sphère permet d'obtenir un albedo (rendement optique d'écran) élevé pour les images projetées de l'intérieur de la sphère, et un albédo plus faible pour les images projetées de l'extérieur de la sphère.

Selon une caractéristique avantageuse de l'invention, on utilise, pour réaliser la sphère-écran, une matière plastique légèrement teintée dans sa masse, de manière à atténuer, lors du fonctionnement en rétroprojection, les multiples réflexions se produisant, à l'intérieur de la matière plastique de l'écran, sur l'interface matière plastique/air. Ces réflexions font apparaître un halo autour des points de l'image produite sur la face intérieure de la sphère. L'utilisation d'une matière teintée permet d'augmenter le contraste des images produites par rétroprojection, notamment des images du viseur fixe.

Selon un mode de réalisation de l'invention, on remplace une ou plusieurs zones de l'écran sphérique, par exemple la zone de projection de l'image du viseur fixe, par des écrans plans, de manière à simplifier les dispositifs optiques de projection extérieurs 54, qui peuvent alors être des projecteurs courants du commerce. Ces écrans plans peuvent être réalisés avec le même matériau que celui de la sphère ou avec un matériau différent. Ils peuvent être fixés, par exemple par collage, sur la sphère, ou bien être fixés entre la sphère et le pilote.

Le cockpit de pilotage 52 ou plus exactement le siège 504 du pilote, est disposé dans la sphère 51 de manière que l'oeil du pilote soit proche du centre de la sphère-écran, à une distance de ce centre inférieure à environ 40 cm.

De façon à faciliter l'introduction du pilote dans la sphère, on équipe le système d'un siège 504 mobile sur des rails 505 pénétrant de l'extérieur de la sphère vers son intérieur. Le pilote s'assied sur le siège 504 à l'extérieur de la sphère, et dès qu'il est assis et, si nécessaire, sanglé, un moteur (non représenté) déplace le siège 504 sur les rails 505 jusqu'à la bonne position (c'est à dire, comme précisé ci-dessus, la position pour laquelle l'oeil du pilote est le plus proche possible du centre de la sphère) pour laquelle le siège 504 est bloqué en déplacement. Bien entendu, le siège 504 comporte des moyens (non représentés) de réglage en hauteur et en inclinaison.

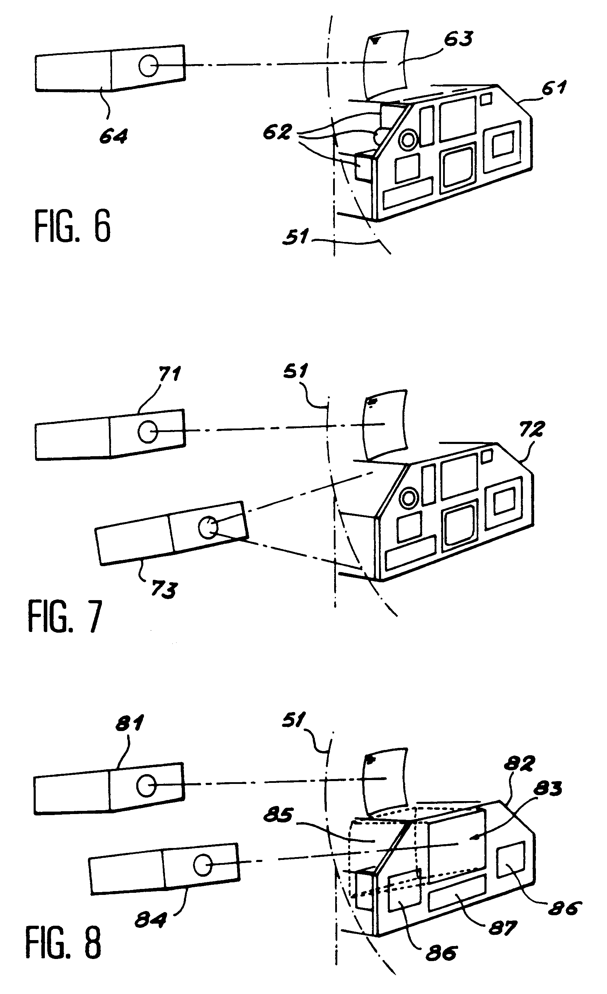

Comme représenté en figure 6, la planche de bord 61 du système de l'invention peut comporter des instruments réels 62. La planche de bord 61 est surmontée de l'image de viseur 63 qui peut, comme précisé ci-dessus, être formée soit sur la sphère elle-même, soit sur un écran plan fixé sur la sphère, soit enfin sur un écran plan fixé dans une position plus rapprochée de l'oeil du pilote que ne l'est la sphère. L'image de viseur est obtenue grâce à un projecteur extérieur respectivement référencé 506, 64, 71, 81 sur les figures 5, 6, 7 et 8.

Comme représenté en figure 7, l'image animée 72 de tous les instruments de la planche de bord peut être projetée sur la sphère ou sur un écran plan (fixé sur la sphère ou en avant de celle-ci) grâce à un projecteur extérieur 73 (référencé 507 sur la figure 5).

Enfin, comme représenté en figure 8, le système peut comporter une planche de bord 82 dans laquelle est pratiquée une découpe 83 permettant au pilote de voir la projection, faite par un projecteur extérieur 84 disposé sous le projecteur 81 d'une image "tête moyenne" 85. La planche de bord 82 est équipée d'instruments réels 86, et d'un boîtier de commande 87.

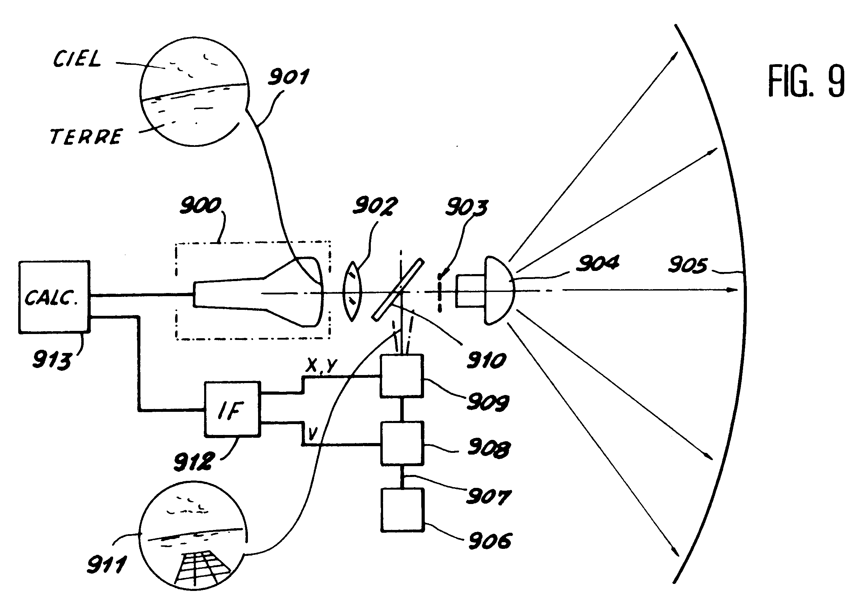

L'ensemble de projecteurs intérieurs 502, permettant de projeter sur la sphère-écran l'image du sol et du ciel comporte, selon un mode de réalisation préféré de l'invention, un projecteur à tube à haute brillance et un projecteur à source laser associés à un même objectif fish-eye de projection. Leurs détails de réalisation ont été représentés en figure 9.

Le projecteur à tube cathodique haute brillance 900 forme sur la face avant de son tube une image 901 du ciel (zone claire) et du sol (zone sombre) tracée en mode télévision, selon un standard qui peut être l'un quelconque des standards existants (par exemple à 625, 875 ou 1024 lignes).

Un dispositif optique à lentilles 902 forme l'image de la face avant du tube cathodique dans le plan focal 903 d'un objectif fish-eye 904 qui projette cette image sur la face intérieure de l'écran sphérique 905 (sphère 51 de la figure 5) de manière à couvrir au moins la moitié de cet écran, soit 2¶ stéradians.

Le projecteur laser comprend un générateur laser 906 qui émet un faisceau visible 907 modulé en intensité par un transducteur, par exemple un transducteur piézoélectrique, et à cristal optique, modulateur référencé 908.

Un dispositif déflecteur 909 utilisant deux miroirs galvanométriques dévie le faisceau laser en mode calligraphique sur un champ s'étendant par exemple sur ± 4,5° en site et ± 4,5° en gisement.

Le faisceau laser ainsi dévié est réfléchi par une lame semi-réfléchissante 910, disposée entre le dispositif optique 902 et l'objectif 904, vers cet objectif 904. L'objectif 904 joue, vis à vis de ce faisceau laser, le rôle d'amplificateur de balayage et transforme la déviation de ± 4,5° en une déviation allant de ± 90° à ± 110° suivant le type de fish-eye utilisé.

Le faisceau laser forme sur l'écran sphérique 905 une image (911) constituée de plusieurs vecteurs représentant la ligne d'horizon et un quadrillage au sol.

Une interface électronique 912 permet d'élaborer en temps réel les signaux analogiques X, Y et vidéo de commande des dispositifs 909 et 908 respectivement.

Les images 901 et 911 précitées, superposées sur l'écran 905, sont produites par un calculateur numérique 913 qui génère ces deux images en tenant compte de la loi optique du fish-eye 904 par rapport à l'écran sphérique, afin de produire sur cet écran des images le moins distordues possible par rapport à ce que devrait observer le pilote. La superposition de ces deux images permet, pour certaines applications, de présenter une ligne d'horizon plus lumineuse, plus contrastée et positionnée avec précision, alors que la ligne d'horizon produite par le seul tube 900 est moins lumineuse et moins contrastée à cause de l'importance de la surface d'écran à éclairer et du phénomène d'écran sphérique intégrant qui détruit le contraste général de l'image.

Selon une variante simplifiée, non représentée, on utilise uniquement le projecteur à tube à haute brillance 900 avec ses dispositifs optiques 902 et 904 et le calculateur 913.

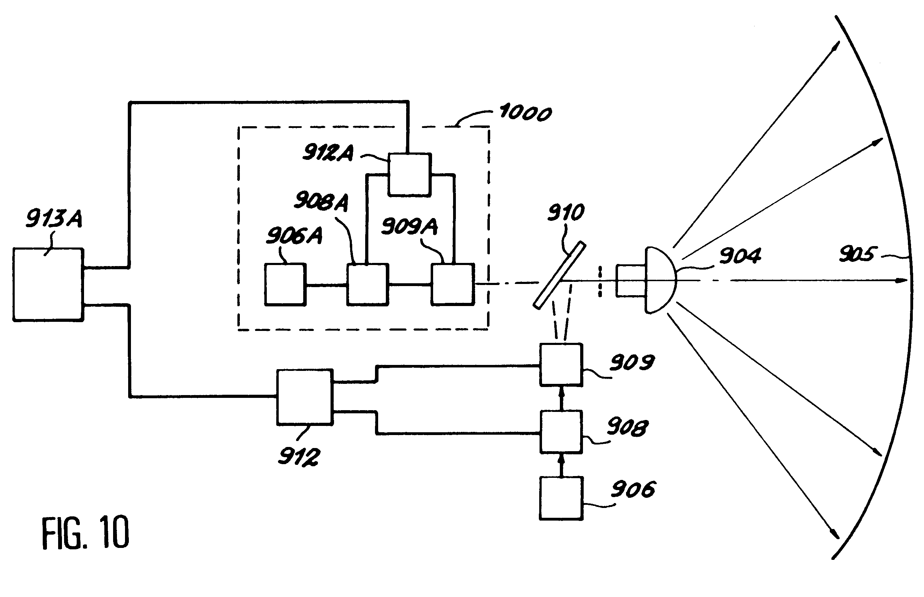

Selon une autre variante, représentée en figure 10, on remplace le tube à haute brillance par un projecteur à générateur laser fonctionnant en balayage télévision afin de tracer une image constituée, par exemple, de deux trames entrelacées de 128 lignes chacune, pour représenter le ciel (zone claire) et le sol (zone sombre). Ce système comporte, outre les dispositifs 904, 905, 906, 908, 909, 910 et 912 identiques à ceux de la figure 9, l'ensemble 1000 constitué des dispositifs 906A, 908A, 909A et 912A respectivement identiques aux dispositifs 906, 908, 909 et 912. Le calculateur 913A est similaire au calculateur 913, mais est prévu pour commander en plus l'ensemble 1000.

La divergence du faisceau laser projeté par l'ensemble 1000 vers l'objectif fish-eye 904 via le miroir semi-transparent 910 est ajustée pour que le diamètre du spot laser projeté sur l'écran 905 couvre deux à trois lignes de balayage de manière à ne pas faire apparaître sur l'écran la trame télévision.

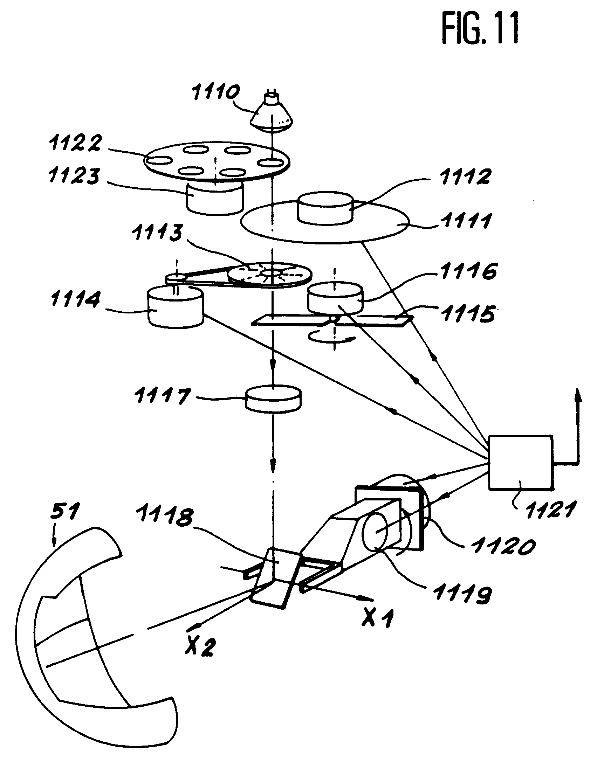

On a représenté en figure 11 un schéma simplifié d'un dispositif implanté dans la sphère-écran près des projecteurs, pour projeter des images simplifiées de cibles matérialisées par plusieurs spots mobiles indépendants, de diamètres variables en fonction de la distance de chaque cible au pilote.

Ce dispositif comporte, pour chaque image cible projetée, une source lumineuse 1110, un disque atténuateur 1111 commandé en rotation par un moteur pas à pas 1112 afin de contrôler la luminosité du spot projeté, un diaphragme 1113 variable commandé par un moteur pas à pas 1114 contrôlant le diamètre du spot projeté, un obturateur 1115 commandé en rotation par un moteur pas à pas 1116 afin d'occulter le spot en permanence ou selon une fréquence variable ou de façon intermittente (clignotement), un objectif de projection 1117 formant l'image du diaphragme 1113 sur l'écran sphérique 51, un miroir 1118 mobile en rotation autour de deux axes rectangulaires X1, X2 et commandé par les moteurs pas à pas 1119 et 1120 respectivement pour chacun de ces axes, afin de déplacer le spot sur l'écran sphérique 51, et un moteur pas à pas 1123 associé à un disque 1122 comprenant plusieurs fenêtres équipées de filtres colorés afin de choisir la couleur du spot projeté. Tous les moteurs pas à pas sont commandés par un calculateur électronique 1121 assurant les liaisons avec le calculateur électronique principal (non représenté) du système, l'initialisation des moteurs pas à pas en position zéro à la mise sous tension du système, et l'élaboration de micro-pas de commande des moteurs 1119, 1120 pour positionner le miroir 1118 avec une résolution voisine d'une minute d'arc.

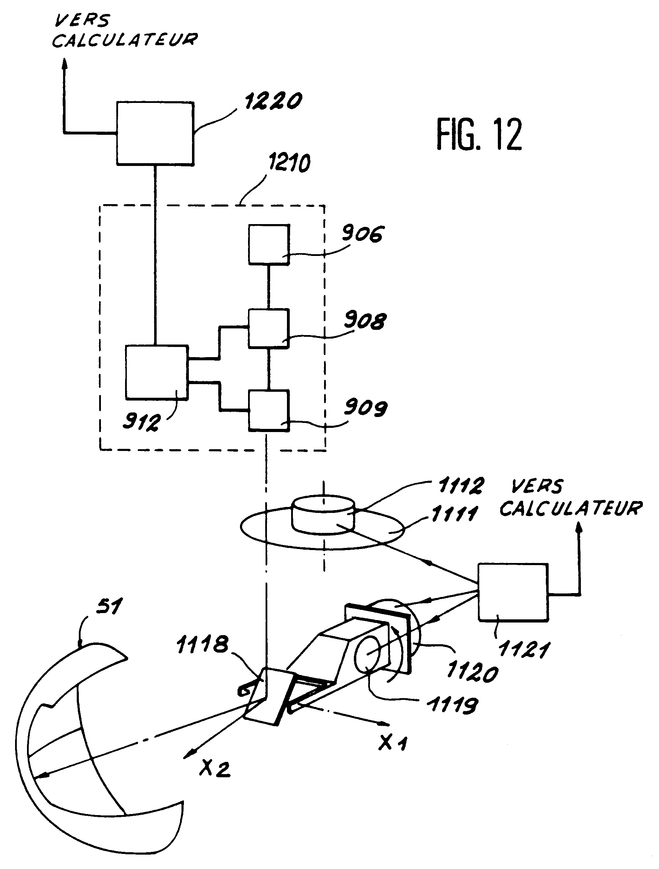

Selon une variante du dispositif de la figure 11, représentée en figure 12, on remplace le spot par une image monochrome ou en noir et blanc de 256 lignes par exemple, obtenue par balayage et modulation d'un ou de deux faisceaux laser.

Dans ce dispositif de la figure 12, les éléments 1111, 1112 et 1118 à 1121 sont respectivement identiques à ceux de même référence de la figure 11. Les autres éléments de la figure 11 sont remplacés par un ensemble 1210 comportant les éléments 906, 908, 909 et 912 respectivement identiques aux éléments de même référence de la figure 9. L'interface 912 est commandée par un calculateur 1220 similaire au calculateur 913 de la figure 9, et ce calculateur 1220 est relié au calculateur central du système. Le calculateur 1220 produit une image de télévision tenant compte des effets de rotation des images induits par le miroir mobile 1118, de l'attitude de la cible en vol, de sa distance et de sa position par rapport à l'observateur.

## Revendications

1. Système de restitution de l'environnement visuel d'un pilote de simulateur, caractérisé en ce qu'il comporte une paroi (51) au moins approximativement sphérique ayant des dimensions du même ordre de grandeur que celles d'un cockpit réel d'aéronef, réalisée en un matériau au moins partiellement translucide, au moins une partie d'au moins une de ses faces étant traitée de façon à former un écran de projection d'images, cette paroi étant associée à au moins un projecteur d'images intérieur (53) et à au moins un projecteur d'images extérieur (54), le projecteur d'images intérieur étant chargé de la projection d'images à grand champ optique, et le projecteur extérieur étant chargé de la projection d'images à haute définition.

2. Système selon la revendication 1, caractérisé en ce que la paroi sphérique a un diamètre compris entre 1 et 3 mètres environ.

3. Système selon la revendication 1 ou 2, caractérisé en ce que l'épaisseur de la paroi est d'environ 2 à 10 mm.

4. Système selon l'une des revendications précédentes, utilisant une paroi sensiblement sphérique, caractérisé en ce que cette paroi est réalisée à partir de deux demi-sphères (55, 56) fabriquées séparément par soufflage à chaud à partir de deux plaques planes en matière plastique et assemblées ensuite pour former une sphère dans laquelle est pratiquée une ouverture (57) permettant l'installation du pilote.

5. Système selon l'une des revendications précédentes, caractérisé en ce que le traitement d'au moins une partie d'au moins la face interne de la paroi consiste à déposer des couches de revêtement.

6. Système selon la revendication 5, caractérisé en ce que les couches de revêtement sont des couches de peinture.

7. Système selon la revendication 6, caractérise en ce que la peinture est de la peinture blanche.

8. Système selon l'une des revendications 5 à 7, caractérisé en ce que l'on fait varier l'épaisseur du revêtement.

9. Système selon l'une des revendications précédentes, caractérisé en ce que le traitement d'au moins une partie d'au moins une face de la paroi est un traitement permettant d'obtenir un dépoli.

10. Système selon l'une quelconque des revendications précédentes, caractérisé en ce que la paroi est en matière plastique teintée dans sa masse.

11. Système selon l'une quelconque des revendications précédentes, caractérisé en ce qu'au moins une zone de la paroi est formée par un écran plan (58).

12. Système selon la revendication 11, caractérisé en ce que l'écran plan est fixé sur la paroi.

13. Système selon la revendication 11, caractérisé en ce que l'écran plan est fixé entre la paroi et le pilote.

14. Système selon l'une quelconque des revendications précédentes, avec un cockpit de pilotage (52) disposé à l'intérieur de la paroi et comportant un siège (504) pour le pilote caractérisé en ce que le siège est disposé de façon que l'oeil du pilote soit proche du centre de la sphère formée par la paroi, à une distance de ce centre inférieure à environ 40 cm.

15. Système selon la revendication 14, caractérisé en ce que le siège (504) est mobile sur des rails (505) et réglable en hauteur et en inclinaison.

16. Système selon l'une quelconque des revendications précédentes, comportant une planche de bord (61), caractérisé en ce que cette planche de bord comporte des instruments réels (62, 85).

17. Système selon la revendication 16, caractérisé en ce qu'au moins une partie de la planche de bord forme écran pour au moins un projecteur (73, 84) extérieur.

18. Système selon l'une quelconque des revendications précédentes, caractérisé en ce que la dispositif projecteur d'images intérieur, projetant l'image animée du ciel et du sol, comporte un projecteur à tube cathodique à haute brillance (900) associé à un objectif "fish-eye" (904).

19. Système selon l'une quelconque des revendications 1 à 17 caractérisé en ce que le dispositif projecteur d'images intérieur, projetant l'image animée du ciel et du sol, comporte un projecteur à générateur lasel (1000) fonctionnant en mode de balayage télévision, associé à un objectif "fish-eye" (904).

20. Système selon la revendication 18 ou 19, caractérisé en ce que le dispositif projecteur d'images intérieur comporte en outre un second projecteur à générateur laser (906), modulateur et dispositif de déviation (909).

21. Système selon la revendication 20, caractérisé en ce que le projecteur à générateur laser effectue un tracé en balayage calligraphique.

22. Système selon la revendication 20 ou 21, caractérisé en ce que le projecteur à générateur laser trace sur la paroi de projection une ligne d'horizon et un quadrillage mobile du sol.

23. Système selon l'une quelconque des revendications précédentes, caractérisé en ce que les images des cibles sont produites par des spots mobiles (figure 11) de diamètres variables pouvant être occultés au moins partiellement.

24. Système selon la revendication 23, caractérisé en ce que les spots peuvent être occultés selon une fréquence variable.

25. Système selon l'une quelconque des revendications 1 à 22, caractérisé en ce que les images des cibles sont produites par un projecteur à généraleur laser (1210).

## Claims

1. System for reproducing the visual environment of a simulator pilot, characterized in that it includes an at least approximately spherical wall (51) having dimensions of the same order of magnitude as those of a real aircraft cockpit, produced in an at least partially translucent material, at least one part of at least one of its faces being treated so as to form an image projection screen, this wall being associated with at least one internal image projector (53) and with at least one external image projector (54), the internal image projector being tasked with projecting images with a wide optical field, and the external projector being tasked with projecting high-definition images.

2. System according to Claim 1, characterized in that the spherical wall has a diameter lying between about 1 and 3 metres.

3. System according to Claim 1 or 2, characterized in that the thickness of the wall is about 2 to 10 mm.

4. System according to one of the preceding claims, using a substantially spherical wall, characterized in that this wall is produced from two hemispheres (55, 56) manufactured separately by hot blow moulding from two plane sheets of plastic, and then assembled to form a sphere in which an aperture (57) is formed allowing the installation of the pilot.

5. System according to one of the preceding claims, characterized in that the treatment of at least one part of at least the inner face of the wall consists in depositing layers of coating.

6. System according to Claim 5, characterized in that the layers of coating are layers of paint.

7. System according to Claim 6, characterized in that the paint is white paint.

8. System according to one of Claims 5 to 7, characterized in that the thickness of the coating is varied.

9. System according to one of the preceding claims, characterized in that the treatment of at least one part of at least one face of the wall is a treatment allowing frosting to be obtained.

10. System according to any one of the preceding claims, characterized in that the wall is made of plastic coloured throughout its bulk.

11. System according to any one of the preceding claims, characterized in that at least one region of the wall is formed by a flat screen (58).

12. System according to Claim 11, characterized in that the flat screen is fixed onto the wall.

13. System according to Claim 11, characterized in that the flat screen is fixed between the wall and the pilot.

14. System according to any one of the preceding claims, with a piloting cockpit (52) arranged within the wall and including a seat (504) for the pilot, characterized in that the seat is arranged in such a way that the eye of the pilot is close to the centre of the sphere formed by the wall, at a distance from this centre less than about 40 cm.

15. System according to Claim 14, characterized in that the seat (504) is movable on rails (505) and adjustable in height and in inclination.

16. System according to any one of the preceding claims, including an instrument panel (61), characterized in that this instrument panel includes real instruments (62, 85).

17. System according to Claim 16, characterized in that at least a part of the instrument panel forms a screen for at least one external projector (73, 84).

18. System according to any one of the preceding claims, characterized in that the internal image projector device, projecting the animated image of the sky and of the ground, includes a high-brightness cathode-ray tube projector (900) associated with a "fish-eye" objective (904).

19. System according to any one of Claims 1 to 17, characterized in that the internal image projector device, projecting the animated image of the sky and of the ground, includes a laser generator projector (1000) operating in television scanning mode, associated with a "fish-eye" objective (904).

20. System according to Claim 18 or 19, characterized in that the internal image projector device further includes a second laser generator projector (906), modulator and deflection device (909).

21. System according to Claim 20, characterized in that the laser generator projector produces a trace in calligraphic scanning.

22. System according to Claim 20 or 21, characterized in that the laser generator projector traces a horizon line and a movable grid pattern of the ground on the projection wall.

23. System according to any one of the preceding claims, characterized in that the images of the targets are produced by movable spots (Figure 11) of variable diameters, capable of being at least partially obscured.

24. System according to Claim 23, characterized in that the spots may be obscured according to a variable frequency.

25. System according to any one of Claims 1 to 22, characterized in that the images of the targets are produced by a laser generator projector (1210).

## Patentansprüche

1. System zur Wiedergabe der visuellen Umgebung eines Piloten im Simulator, dadurch gekennzeichnet, daß es eine wenigstens annähernd kugelförmige Wand (51) mit Abmessungen in der gleichen Größenordnung wie derjenigen eines wirklichen Luftfahrzeugcockpits aufweist, die aus einem wenigstens teilweise durchscheinenden Material hergestellt ist, wobei ein Teil wenigstens einer ihre Seiten so behandelt ist, daß ein Bildprojektionsschirm gebildet ist, wobei die Wand wenigstens einem inneren Bildprojektor (53) und wenigstens einem äußeren Bildprojektor (54) zugeordnet ist, wobei der innere Bildprojektor mit der Projektion von Bildern mit großem Gesichtsfeld und der äußere Projektor mit der Projektion von Bildern mit hoher Auflösung beauftragt ist.

2. System nach Anspruch 1, dadurch gekennzeichnet, daß die kugelförmige Wand einen Durchmesser von etwa zwischen 1 und 3 Meter aufweist.

3. System nach Anspruch 1 oder 2, dadurch gekennzeichnet, daß die Wand etwa 2 bis 10 mm dick ist.

4. System nach einem der vorhergehenden Ansprüche unter Verwendung einer im wesentlichen kugelförmigen Wand, dadurch gekennzeichnet, daß diese Wand aus zwei Halbkugeln (55, 56) realisiert ist, die getrennt ausgehend von zwei flachen Platten aus Kunststoffmaterial durch Heißblasen hergestellt und dann zusammengefügt sind, um eine Kugel zu bilden, in der eine Öffnung (57) zum Unterbringen des Piloten vorgesehen ist.

5. System nach einem der vorhergehenden Ansprüche, dadurch gekennzeichnet, daß die Behandlung wenigstens eines Teils wenigstens der Innenseite der Wand im Aufbringen von Überzugsschichten besteht.

6. System nach Anspruch 5, dadurch gekennzeichnet, daß die überzugsschichten Farbschichten sind.

7. System nach Anspruch 6, dadurch gekennzeichnet, daß die Farbe weiße Farbe ist.

8. System nach einem der Ansprüche 5 bis 7, dadurch gekennzeichnet, daß man die Dicke des Überzugs schwanken läßt.

9. System nach einem der vorhergehenden Ansprüche, dadurch gekennzeichnet, daß die Behandlung wenigstens eines Teils wenigstens einer Seite der Wand eine Behandlung ist, die den Erhalt einer matten Fläche ermöglicht.

10. System nach einem der vorhergehenden Ansprüche, dadurch gekennzeichnet, daß die Wand aus in seiner Masse getöntem Kunststoffmaterial besteht.

11. System nach einem der vorhergehenden Ansprüche, dadurch gekennzeichnet, daß wenigstens eine Zone der Wand durch einen flachen Bildschirm (58) gebildet ist.

12. System nach Anspruch 11, dadurch gekennzeichnet, daß der flache Bildschirm an der Wand befestigt ist.

13. System nach Anspruch 11, dadurch gekennzeichnet, daß der flache Bildschirm zwischen der Wand und dem Piloten befestigt ist.

14. System nach einem der vorhergehenden Ansprüche, mit einem Flugcockpit (52), das im Inneren der Wand angeordnet ist und einen Sitz (504) für den Piloten aufweist, dadurch gekennzeichnet, daß der Sitz so angeordnet ist, daß das Auge des Piloten nahe dem Mittelpunkt der durch die Wand gebildeten Kugel in einer Entfernung von diesem Mittelpunkt von weniger als etwa 40 cm liegt.

15. System nach Anspruch 14, dadurch gekennzeichnet, daß der Sitz (504) auf Schienen (505) beweglich und höhen- und neigungsverstellbar ist.

16. System nach einem der vorhergehenden Ansprüche mit einem Instrumentenbrett (61), dadurch gekennzeichnet, daß dieses Instrumentenbrett echte Instrumente (62, 85) aufweist.

17. System nach Anspruch 16, dadurch gekennzeichnet, daß wenigstens ein Teil des Instrumentenbretts einen Bildschirm für wenigstens einen äußeren Projektor (73, 84) bildet.

18. System nach einem der vorhergehenden Ansprüche, dadurch gekennzeichnet, daß die innere Bildprojektoreinrichtung, die ein belebtes Bild des Himmels und des Bodens projiziert, einen Projektor (900) mit Kathodenstrahlröhre mit hoher Helligkeit aufweist, der einem "Fischaugen"-Objektiv (904) zugeordnet ist.

19. System nach einem der Ansprüche 1 bis 17, dadurch gekennzeichnet, daß die innere Bildprojektoreinrichtung, die das belebte Bild des Himmels und des Bodens projiziert, einen Projektor mit Lasergenerator (1000) aufweist, der in der Fernsehabtastbetriebsart arbeitet und einem "Fischaugen"-Objektiv (904) zugeordnet ist.

20. System nach Anspruch 18 oder 19, dadurch gekennzeichnet, daß die innere Bildprojektoreinrichtung ferner einen zweiten Projektor mit Lasergenerator (906), Modulator und einer Ablenkeinrichtung (909) aufweist.

21. System nach Anspruch 20, dadurch gekennzeichnet, daß der Projektor mit Lasergenerator eine Zeichnung in kalligraphischer Abtastung durchführt.

22. System nach Anspruch 20 oder 21, dadurch gekennzeichnet, daß der Projektor mit Lasergenerator auf der Projektionswand eine Horizontlinie und ein bewegliches Raster des Bodens zeichnet.

23. System nach einem der vorhergehenden Ansprüche, dadurch gekennzeichnet, daß die Bilder der Ziele durch bewegliche Flecken (Fig. 11) mit veränderlichem Durchmesser erzeugt werden, die wenigstens teilweise abgedunkelt werden können.

24. System nach Anspruch 23, dadurch gekennzeichnet, daß die Flecken nach einer veränderlichen Frequenz abgedunkelt werden können.

25. System nach einem der Ansprüche 1 bis 22, dadurch gekennzeichnet, daß die Bilder der Ziele durch einen Projektor mit Lasergenerator (1210) erzeugt werden.
